# EUROPEAN PATENT APPLICATION

(11) **EP 1 619 836 A1**
(43) Date of publication of application: **25.01.2006**
(21) Application number: 04291842.5
(22) Date of filing: 19.07.2004
(51) Int. Cl.: H04L 12/56

(54) **Method for optimizing information exchanges in a telecommunication system including multiple local networks such as an ad-hoc system**

(71) Applicant: Mitsubishi Electric Information Technology Centre Europe B.V., 1119 NS Schiphol Rijk (NL); MITSUBISHI ELECTRIC CORPORATION, Tokyo 100-8310 (JP)
(72) Inventor: Seguin, Laure Mitsubishi Electricite, 35708 Rennes Cedex 17 (FR)
(74) Representative: Saint-Marc-Etienne, Christophe Andréas

(57) **Abstract**

The present invention relates to a method for transmitting information in a telecommunication system comprising multiple local networks, which information is to be transmitted within at least one frame FR0.

The method according to the invention includes a section creation step for generating at least one section to be included in said frame FR0, which section includes multiple slots, e.g. SLT31, SLT32, SL34 or SLT22, each slot being allocated to a given terminal for enabling said terminal to transmit information.

The invention enables a terminal to identify itself simply by transmitting said information within the slot allocated to said terminal.

## Description

The present invention relates to a method for transmitting information in a telecommunication system comprising multiple local networks, which information is to be transmitted within at least one frame.

Such methods are currently used in various types of telecommunications systems. Such systems may be of a so-called cellular type, which are closely controlled by a system infrastructure, or may be of a so-called ad-hoc type, which are relatively loosely controlled by a system infrastructure, much of the management of an ad-hoc system being distributed among local controllers included each in a local network. Though such a distributed management allows high flexibility and modularity, which in turn enable an ad-hoc system to adapt itself to changing operating conditions, and in particular to varying workloads, each local controller usually performs its own managing operations with little or no knowledge of operating conditions prevailing in other, and particularly adjacent local networks. Hence, in the known state of the art of ad-hoc telecommunication systems, interference problems between communications involving terminals located in neighbouring local networks may arise, which is in principle not the case in cellular systems, in which all the information relevant to management operations is centralized in the system infrastructure, at the cost of huge control information traffic and loss of flexibilty.

Flexible communication of control information between potentially active and already active terminals in ad-hoc systems is thus called for, in order to prevent new communications from interfering with already established communications, while such communication of control information should represent as little additional traffic as possible.

According to one of its aspects, the invention aims at solving the aforementioned problem, by providing a method for transmitting information related to operating conditions of any given terminal without requiring transmission of an explicit identification code of said terminal.

Indeed, a method according to the opening paragraph is characterized according to the invention in that it includes a section creation step for generating at least one section to be included in the information frame, which section is splitted into multiple slots, each slot being allocated to a given terminal for enabling said terminal to transmit information in the form of a signal positioned within said slot.

The invention enables a terminal to identify itself simply by transmitting said information within the slot allocated to said terminal. This allows implicit addressing of a transmitting terminal by a receiving terminal, as opposed to explicit addressing which would require transmission of specific address data and would thus entail an increase of communication traffic. As will be explained hereinafter, such an implicit adressing scheme also enables an easy reply, by sending back a signal within the slot allocated to the original transmitting terminal, each terminal being then preferably required to continuously and systematically scrutinize its own allocated slot.

The signal to be positioned in a slot allocated to a given terminal may be simply constituted by a pulse generated by said terminal, but it may also consist in a series of pulses whose positions within their allocated slot are determined by bit values included in a predefined binary codeword specific to the code used for encoding said signal.

According to a particular embodiment of the invention, a method as described above further includes a code definition step for defining at least one code to be allocated to a given local network, all terminals included in said given network being intended to use said code for encoding information to be transmitted by said terminals.

The fact that each network possesses its own dedicated code will enable to multiply by the number of possible codes the size of the addressing space obtained by the above described slotting, since it may enable a receiver to determine, by identifying the code originally used, the respective origins of two different signals encoded according to different codes but sent within a same slot.

According to another particular embodiment of the invention, which may be used alternatively or cumulatively with the previous one, a method as described above further includes a power setting step for ensuring that all terminals included in the telecommunication system use a same nominal transmitting power.

The fact that all signals are originally transmitted with essentially a same power level will enable a receiver of such a signal to determine wether an original transmitter of said signal is located in its immediate surroundings or not, i.e. if said original transmitter belongs to the same local network or not, which in turn enriches the informational content of the signals transmitted according to this other embodiment of the invention. Furthermore, the use of a same nominal transmitting power for all transmitters included in a system gives to any receiver a knowledge of the original power of a received signal, and thus enables said receiver to quantify the gain of the communication channel through which said signal has been transmitted. Such a gain evaluation will in turn enable any receiver to quantify an interference level which would be generated by the original transmitter for any given transmitting throughput, and thus to assess the impact said original transmitter may have on a quality of service to be delivered by said receiver.

The uses of the implicit addressing scheme defined hereinbefore are multiple. A specific application of the above described embodiments of the invention will now be more precisely described.

Indeed, as explained earlier, the invention may advantageously be used for preventing new communications from interfering with already established communications between potentially active and already active terminals in ad-hoc systems, without generating a prohibitive amount of control information.

Thus, according to another one of its aspects, the invention also relates to a method for establishing a communication between a transmitting terminal and a receiving terminal included in a telecommunication system comprising multiple local networks, characterized in that it includes a connection request step in the course of which said transmitting terminal sends a connection request in the form of a frame section generated by said transmitting terminal by carrying out a section creation step as described hereinbefore.

Transmission of such a connection request will enable to broadcast that a new connection may soon be established, the transmitter of the request being identifiable by the position of the slot the transmitted signal is actually transmitted in.

According to a variant of this aspect, the invention also relates to a method for establishing a communication between a transmitting terminal and a receiving terminal, which method includes an alert transmitting step in the course of which any third terminal having analysed a connection request and deduced from such an analysis that the requested connection imperils an ongoing communication involving said third terminal generates an alert frame section by carrying out at least one section creation step and transmitting an alert signal positioned in a slot which should be allocated to the transmitting terminal.

Such an alert transmitting step allows any third terminal to reply to a terminal having originally broadcasted a connection request, without requiring said third terminal to actually determine a destination address for such a reply, in this case an alarm signal positioned in a slot normally allocated to the original broadcasting terminal. The position of this slot may be known to said third terminal as being that one which was used by the terminal having originally broadcasted a connection request, or may be deduced by said third terminal on the basis of other information transmitted to this third terminal by its network controller in cases where the original connection request is not generated by carrying out at least one section creation step as described above but still enables to identify its sender.

The implicit addressing scheme according to the invention thus allows very quick information exchanges, while additionnally saving computation resources, since it enables to dispense with address decoding or at the very least with address encoding for replying to a connection request.

A method for establishing a communication between a transmitting terminal and a receiving terminal as described above will advantageously include a receiving anouncement step in the course of which a receiving terminal identified as such in a connection request sends an anouncement in the form of at least one frame section generated by said receiving terminal by carrying out at least one section creation step, and transmitting a pulse encoded according to the code allocated to the local network to which said receiving terminal belongs.

Transmission of such a receiving anouncement enables the future receiver to broadcast that a new connection may soon be established, said future receiver being identifiable by the position of the slot the receiving anouncement is actually transmitted in. Thanks to the invention, any terminal receiving such an anouncement and being currently involved in another ongoing communication as transmitter may issue a signal enabling said future receiver to assess the impact of this ongoing communication on quality of the connection said future receiver is intended to constitute the endpoint of.

In another embodiment of the aspect of the invention described above, the anouncement transmitted by the receiving terminal includes a first and a second frame section generated by said receiving terminal by carrying out two successive section creation steps, in order to transmit a first flagging signal encoded according to the code allocated to the local network to which said receiving terminal belongs, and a second flagging signal encoded according to a common code shared by all local networks.

The use of two different codes for encoding two successive flagging signals gives two degrees of freedom for possible interpretations of an incoming signal. For example, a terminal able to decode the successive first and second flagging signals will know that the original transmitter belongs to its own local network, whereas a terminal only able to decode the second flagging signal will know that the original transmitter belongs to another local network. This embodiment of the invention thus enriches the informational content of the receiving anouncement, by enabling a terminal to identify incoming signals transmitted on a same slot, though encoded according to different codes, which will indicate that said incoming signals were originally transmitted by terminals belonging to different local networks.

A method as described above may advantageously also include an indicator transmitting step in the course of which any third terminal, previously identified as a neighbouring terminal of said receiving terminal and having received said receiving anouncement, generates at least one indicator frame section by carrying out at least one section creation step and transmitting at least one indicator signal positioned in a slot allocated to said third terminal.

According to a technique known to those skilled in the art, a neighbour list may be established for each given terminal and include other terminals previously identified as neighbours. Each listed terminal may then symmetrically be informed that it should consider itself as a neighbour of said given terminal. A neighbouring terminal may be identified as such e.g. if it is located within a predetermined distance of said given terminal, or if pilot signals sent by said neighbouring terminal are received by said given terminal with a power level exceeding a predetermined threshold, etc.

The indicator transmitting step described above will thus allow the future receiver to quantify the level of interference generated by its neighbouring terminals, and will hence enable said future receiver to determine if it will be able to actually deliver the quality of service it is expected to provide.

In another embodiment of the aspect of the invention described above, the indicator includes a first and a second frame section generated by said third terminal by carrying out two successive section creation steps, in order to transmit a first indicator signal encoded according to the code allocated to the local network to which said third terminal belongs, and a second indicator signal encoded according to a common code shared by all local networks.

The use of two different codes for encoding two successive warning signals gives two degrees of freedom for possible interpretations of an incoming signal, with the advantages already explained above.

According to one of its harware-related aspects, the invention also concerns a telecommunication system comprising multiple local networks, in which information is to be transmitted within at least one frame, system characterized in that it includes section creation means for generating at least one section to be included in said frame, which section is splitted into multiple slots, each slot being allocated to a given terminal for enabling said terminal to transmit information.

According to yet another one of its aspects, the invention also concerns a signal intended to carry an information frame including at least one section splitted into multiple slots, each slot being allocated to a given terminal for enabling said terminal to transmit information.

The characteristics of the invention mentioned above, as well as others, will emerge more clearly from a reading of the following description given in relation to the accompanying figures, amongst which:
Fig. 1 is a schematic diagram depicting a telecommunication system in which the invention is embodied, and;
Fig.2 is a chronogram depicting frames including sections created by means of the invention and intended to be transmitted in the above system.

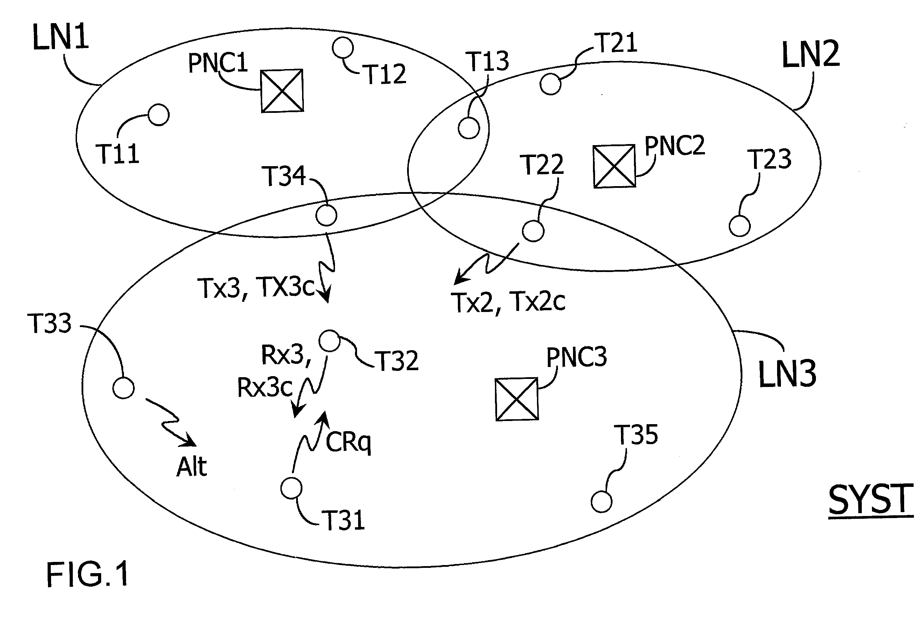

Fig.1 schematically represents an ad-hoc telecommunication system SYST comprising in this example three local networks LN1, LN2 and LN3 which are in fact piconets having each a maximal radius of roughly ten meters. Each local network LN1, LN2 or LN3 includes a piconet controller PNC1, PNC2 or PNC3, which is intended to manage the traffic exchanged within its piconet PNC1, PNC2 or PNC3 by terminals included therein (T11, T12, T13), (T21, T22, T23) or (T31, T32, T33, T34 and T35), respectively.

The invention aims at allowing optimal regulation of the communications exchanged within such an ad-hoc system SYST, by preventing new communications from interfering with already established communications between potentially active and already active terminals, without generating a prohibitive amount of control information.

Thus, a method for establishing a communication according to the present invention includes a connection request step in the course of which a terminal T31 seeking to establish a new communication transmits a connection request CRq, which enables to broadcast to all neighbouring terminals that a new connection may soon be established in their vincinity, the transmitter of the request being identifiable by the position of the slot the transmitted signal is actually transmitted in.

The method according to the invention includes an alert transmitting step in the course of which any third terminal, in this example terminal T33, having analysed said connection request and deduced from such an analysis that the requested connection imperils an ongoing communication involving said third terminal generates an alert signal Alt positioned in a slot which should be allocated to the transmitting terminal T31.

The terminal T31 having originally requested a connection will be able to analyse the contents of alert signals Alt, whose generation has been triggered by the original transmission of its connection request CRq, and will thus be able to determine if said connection should realistically still be established or not. On the basis of the findings of such an analysis, terminal T31 will either confirm or infirm its connection request. Following a confirmation by terminal T31, the connection process will be continued, whereas an infirmation will require terminal T31 to send a new connection request later if such a connection is still needed.

The method according to the invention further includes a receiving anouncement step in the course of which a receiving terminal identified as such in the connection request CRq, in this example terminal T32, sends an anouncement (Rx3, Rx3c) in the form of a first flagging signal Rx3 encoded according to the code allocated to the local network LN3 to which said receiving terminal T32 belongs, followed by a second flagging signal Rx3c encoded according to a common code shared by all local networks LN1, LN2 and LN3.

Transmission of such a receiving anouncement (Rx3, Rx3c) enables the future receiver T32 to broadcast that a new connection may soon be established, said future receiver T32 being identifiable by the position of the slots including the flagging signals. Thanks to the invention, each terminal neighbouring this future receiver may recognize itself as such by identifying the slot used by terminal T32 for broadcasting the receiving anouncement (Rx3, Rx3c) and may then, if said neighbouring terminal is currently involved in another ongoing communication as transmitter, issue a signal enabling this future receiver T32 to assess the impact of this ongoing communication on the connection said future receiver T32 is intended to constitute the endpoint of.

The use of two different codes for encoding the two successive flagging signals Rx3 and Rx3c gives two degrees of freedom for possible interpretations of an incoming signal. For example, a terminal able to decode the successive first and second flagging signals Rx3 and Rx3c, like for example the terminal T34, will know that the future receiver T32 belongs to its own local network LN3, whereas a terminal only able to decode the second flagging signal Rx3c, like for example the terminal T22, will know that the future receiver T32 belongs to a local network other than its own.

It should be noted here that, in alternative embodiments of the invention, all terminals may include a code memory comprising a code table associating each code used in the telecommunication system SYST with a relevant network identification of the local network said code is allocated to. In such alternative embodiments, any terminal transmitting a connection request CRq or a receiving anouncement (Rx3, Rx3c) may then include in said alert or anouncement its own network identification, which will enable any receiver of such a request or anouncement to extract from its code table the relevant code allocated to the network the request or anouncement originates from, and thus to effectively decode all information included in said request or anouncement, and hence quantify even more precisely the threat posed by the planned connection as would be the case if, for example, said information were to explicit a requested throughput value or bit error rate.

A method as described above also includes an indicator transmitting step in the course of which terminals having received and analysed a receiving anouncement (Rx3, Rx3c) and having been previously identified as neighbouring terminals of the future receiving terminal T32, in this example terminals T22 and T34, generate respective indicator signals (Tx3, Tx3c) and (Tx2, Tx2c), positioned in slots SLT22 and SLT34 allocated to said terminals T22 and T34, in order to enable said terminal T32 to quantify the level of interference generated by its neighbouring terminals, and thus to enable terminal 32 to determine if it will be able to actually deliver the quality of service it is expected to provide.

Each indicator includes a first indicator signal Tx2 and Tx3 encoded according to the code allocated to the local network LN2 and LN3 to which its related terminal T22 and T34 belongs, and a second indicator signal Tx2c and Tx3c encoded according to a common code shared by all local networks.

This embodiment of the invention thus enriches the informational content of the anouncement, particularly if all transmitted signals are to be sent with a same transmitting power during the communication establishment phase. Actually, if a same future receiving terminal e.g. T32 detects successive indicator signals having different power levels and/or different coding schemes as is the case in the present example, this terminal T32 will be able to deduce from this fact that seperate terminals belonging to different local networks are currently invlolved in potentially interfering communications, and may determine on the basis of each power level if said interfering communications pose a threat to a predefined quality level it is to provide for its own communication.

If the future receiving terminal T32 deduces from an analysis of the power levels of the various indicator signals (Tx3, Tx3c) and (Tx2, Tx2c) said terminal T32 will have received that ongoing communications involving neighbouring terminals pose a threat to the quality of service said terminal T32 is expected to provide, terminal T32 may decline to serve as endpoint for the connectoon requested by terminal 31, who will have to desist from its request and maybe issue a new connection request at a later time, and thus again trigger a process similar to that discribed above.

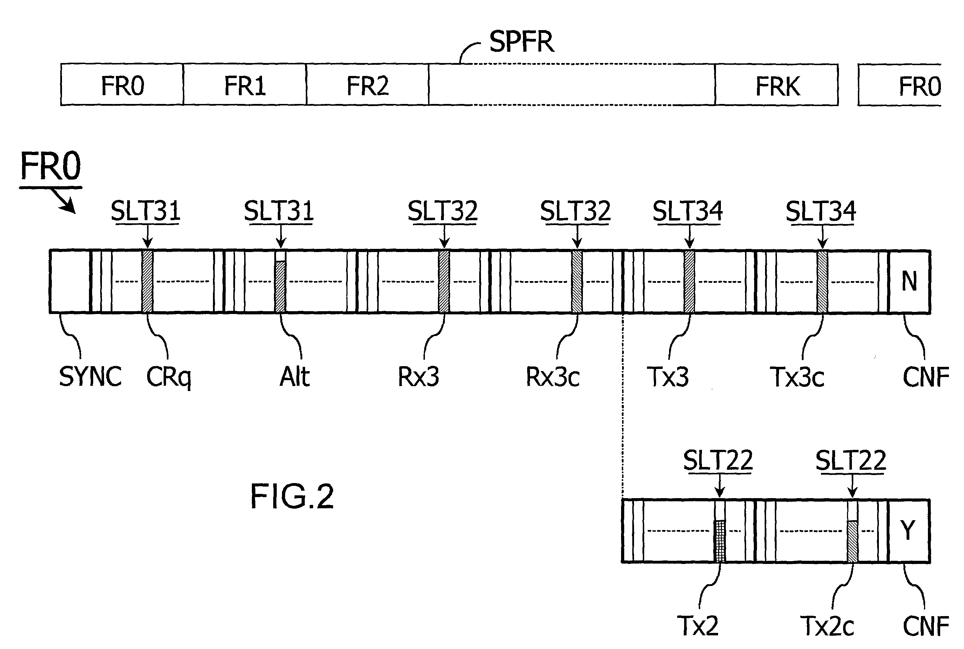

Fig.2 depicts various frames transmitted in the above-described ad-hoc telecommunication system. A superframe SPFR includes a control information frame FRO intended to include all control information necessary for managing ongoing communications as well as connection requests, and data information frames (FR1, FR2...FRK) intended to carry data to be actually exchanged between terminals included in said telecommunication system.

The control information frame FRO includes a first section SYNC intended to carry beacons to be used by all terminals for synchronization purposes.

In a following section of frame FRO, terminal T31 sents a connection request signal CRq in a slot SLT31 specifically allocated to said terminal T31.

In a following section of frame FRO, another terminal T33 sents an alert signal Alt positioned in said slot SLT31 which should be allocated to the originally transmitting terminal, i.e. to terminal T31. It should be noted here that, since terminals T31 and T33 are rather far from each other, as can be seen in the previous Figure, the power level of the alert signal Alt is not at the highest possible level, which may lead terminal T31 to discard this alert signal Alt.

In two following sections of frame FRO, a receiving terminal T32 identified as such in the connection request CRq sends a receiving anouncement (Rx3, Rx3c) in the form of a first flagging signal Rx3 encoded according to the code allocated to the local network LN3 to which said receiving terminal T32 belongs, followed by a second flagging signal Rx3c encoded according to a common code shared by all local networks, which first and second flagging signals are positioned in the slot SLT32 allocated to terminal T32.

Each flagging signal Rx3 and Rx3c may for example consist in a series of pulses whose positions within slot SLT32 are determined by bit values included in a predefined binary codeword specific to the code used for encoding the relevant flagging signal.

In two following sections of frame FRO, terminals T22 and T34, having analysed said receiving anouncement (Rx3, Rx3c) and deduced from such an analysis that they are neighbours of the original sender of said receiving anouncement (Rx3, Rx3c), transmit indicators (Tx2, Tx2c) and (Tx3, Tx3c) in the form of first indicator signals Tx2, Tx3 encoded according to the codes allocated to the local networks LN2 and LN3 to which said terminals T22, T34 belong, and second indicator signals Tx2c, Tx3c encoded according to a common code shared by all local networks, which indicator signals are positioned in the slots SLT22 and SLT34 respecively allocated to terminals T22 and T34.

Each indicator signal Tx2, Tx2c, Tx3 or Tx3c may for example consist in a series of pulses whose positions within its slot SLT22 or SLT34 are determined by bit values included in a predefined binary codeword specific to the code used for encoding said warning signal.

It should be noted here that terminal T32 may not be able to decode the first indicator signal Tx2 transmitted by terminal T22 encoded according to its own code, i.e. the code specifically allocated to the local network LN2 to which terminal T22 belongs, except if terminal T22 has transmitted its own network identification and if terminal T32 includes a code table comprising the codes allocated to all local networks. However, terminal T32 will be able to decode the second warning signal Tx2c transmitted by terminal T22 encoded according to the common code, and thus be able to deduce form said second warning signal Tx2c that the communication which terminal T32 is about to receive may be disturbed by a terminal belonging to a neighbouring local network. This embodiment of the invention thus enables to spread control information from one network to another without requiring to centralize the management of said control information.

Furthermore, in the situation depicted here, the indicator (Tx3, Tx3c) indicates to terminal T32 that the requested connection may be harmed by a terminal belonging to the same local network as its own since its own code was used for encoding the first warning signal Tx3. The indicator (Tx3, Tx3c) also indicates to terminal T32 that the communication supported by the sender of said indicator (Tx3, Tx3c) may endanger the quality of service said terminal T32 is to provide, since the power of the warning signals Tx3, Tx3c is at its highest level. In such a situation, the future receiving terminal T32 should preferably decline to participate in the connection whose establishment was originally requested by terminal T31, which refusal is indicated by an "N" in a confirmation section CNF which closes the control information frame FRO. Following such a refusal, terminal T31 may issue a new connection request at a later time, and thus again trigger a process similar to that discribed above.

If, however, only terminal T22 were to transmit an indicator (Tx2, Tx2c) as shown at the bottom of the present Figure, this indicator would signify that the requested connection could only be potentially harmed by a terminal belonging to another local network since it used a different code for encoding the first indicator signal Tx2, which terminal would furthermore not be actually very harmful since the power of the indicator signals Tx2, Tx2c is at a relatively low level. In such a case, the future receiving terminal T32 may choose to agree to participate in the connection whose establishment was originally requested by terminal T31, which agreement will be indicated by a "Y" featured in the confirmation section CNF which closes the control information frame FRO.

## Claims

1. Method for transmitting information in a telecommunication system comprising multiple local networks, which information is to be transmitted within at least one frame, method **characterized in that** it includes a section creation step for generating at least one section to be included in said frame, which section is splitted into multiple slots, each slot being allocated to a given terminal for enabling said terminal to transmit information.

2. Method for transmitting information as claimed in claim 1, further including a code definition step for defining at least one code to be allocated to a given local network, all terminals included in said given network being intended to use said code for encoding information to be transmitted by said terminals.

3. Method for transmitting information as claimed in any one of claims 1 or 2, further including a power setting step for ensuring that all terminals included in the telecommunication system use a same nominal transmitting power.

4. Method for establishing a communication between a transmitting terminal and a receiving terminal, **characterized in that** it includes a connection request step in the course of which said transmitting terminal sends a connection request in the form of a frame section generated by said transmitting terminal by carrying out a section creation step as claimed in any one of claims 1 to 3.

5. Method for establishing a communication between a transmitting terminal and a receiving terminal, **characterized in that** it includes an alert transmitting step in the course of which any third terminal having analysed a connection request and deduced from such an analysis that the requested connection imperils an ongoing communication involving said third terminal generates an alert frame section by carrying out at least one section creation step as claimed in any one of claims 1 to 3 and transmitting an alert signal positioned in a slot which should be allocated to the transmitting terminal.

6. Method for establishing a communication between a transmitting terminal and a receiving terminal, **characterized in that** it includes a receiving anouncement step in the course of which a receiving terminal identified as such in a connection request sends an anouncement in the form of at least one frame section generated by said receiving terminal by carrying out at least one section creation step as claimed in any one of claims 1 to 3, and transmitting a pulse encoded according to the code allocated to the local network to which said receiving terminal belongs.

7. Method for establishing a communication as claimed in claim 6, **characterized in that** the anouncement transmitted by the receiving terminal includes a first and a second frame section generated by said receiving terminal by carrying out two successive section creation steps, in order to transmit a first flagging signal encoded according to the code allocated to the local network to which said receiving terminal belongs, and a second flagging signal encoded according to a common code shared by all local networks.

8. Method for establishing a communication as claimed in any one of claims 6 or 7, **characterized in that** it includes an indicator transmitting step in the course of which any third terminal, previously identified as a neighbouring terminal of said receiving terminal and having received said receiving anouncement, generates at least one indicator frame section by carrying out at least one section creation step and transmitting at least one indicator signal positioned in a slot allocated to said third terminal.

9. Method for establishing a communication as claimed in claim 8, **characterized in that** the indicator includes a first and a second frame section generated by said third terminal by carrying out two successive section creation steps, in order to transmit a first indicator signal encoded according to the code allocated to the local network to which said third terminal belongs, and a second indicator signal encoded according to a common code shared by all local networks.

10. Telecommunication system comprising multiple local networks, in which information is to be transmitted within at least one frame, system **characterized in that** it includes section creation means for generating at least one section to be included in said frame, which section is splitted into multiple slots, each slot being allocated to a given terminal for enabling said terminal to transmit information.

11. Signal intended to carry an information frame including at least one section splitted into multiple slots, each slot being allocated to a given terminal for enabling said terminal to transmit information.
